# EUROPEAN PATENT SPECIFICATION

(11) **EP 1 580 104 B1**
(45) Date of publication and mention of the grant of the patent: **08.09.2010**
(21) Application number: 04290813.7
(22) Date of filing: 26.03.2004
(51) Int. Cl.: B62J 6/18

(54) **Cable-holding device for a bicycle cable**
Kabelhalter für Fahrradkabel
Porte-câble pour cable de bicyclette

(43) Date of publication of application: 28.09.2005
(73) Proprietor: SHIMANO INC., Osaka 590-8577 (JP)
(72) Inventor: Fujii, Kazuhiro, Osaka 586-0044 (JP)
(74) Representative: Intes, Didier Gérard André

(56) References cited:
- EP-A- 0 518 203
- EP-A- 0 691 262
- EP-A- 0 865 983
- EP-A- 1 118 533
- DE-A- 10 028 544
- DE-C- 3 836 037
- DE-C- 3 915 897
- US-A1- 2001 055 515
- US-B1- 6 270 042

## Description

The present invention relates to a cable-holding device for a bicycle cable, in particular a cable for controlling the functions of certain elements of the bicycle such as, for example, a rear and/or a front derailleur. More particularly, this cable can be an electric cable formed of one or several lines.

Such an electric cable may serve to connect the components of a control system for controlling several functions. For example, the bicycle may be provided with a bicycle computer for displaying data concerning the ride, such as the speed and the distance covered, in which case the cable would have at least one line for connecting at least one data-detecting sensor to the computer. At least one line of the cable may also serve to control motorized elements such as a rear derailleur and/or a front derailleur, by connecting a control switch to a motor for such elements.

Such a cable extends over part of the bicycle length so as to connect the components of the control system electrically. For example, the computer display is located on the handlebars so as to be visible to the rider whereas the data detecting sensors can be located on various zones of the bicycle (e.g. close to the front wheel or close to the front and rear derailleurs). Likewise, the derailleur switches can be located close to the handlebars (e.g. on a brake lever) at a distance from the motors of the derailleurs and their battery box.

It is known in the art that a cable extends along part of the bicycle frame. For example, it is the case of the electric cable for the lights of the bicycle. It is also the case of the brake cable for linking the rear brake to its brake lever and of the cable for controlling the derailleurs.

Such cables are maintained as close as possible to a tube of the frame by means of cable receivers formed of sleeve-like parts fixed to the tube, for example by welding.

However, the presence of several cables hung in this way can be unsightly and detrimental to the aesthetics of the bicycle. Furthermore, such cables are exposed to shocks and run the risk of being caught by external objects such as certain of the driver's accessories, stones, etc., electric cables being particularly vulnerable. In addition, the installation of the cables necessitates the cables being successively inserted into several cable receivers and being pulled or pushed therethrough. Therefore, such an installation is rather complicated.

Further, a conventional cable holding device according to the preamble of claim 1 is disclosed in document DE 3 915 897 C1.

The present invention as defined by claim 1 seeks to propose an improved cable-holding device, substantially devoid of the above drawbacks.

Preferred embodiments are defined in the dependent claims.

This object is achieved by the fact that the cable-holding device of the invention comprises an elongated cable-fixing member having a longitudinal receiving groove for receiving the bicycle cable and at least one side portion for fixing, located along a side of said groove and adapted for fixing to a bicycle frame by adhesive means.

The elongated cable-fixing member accommodates a length of cable corresponding to the length of said fixing member and efficiently supports this length of cable with respect to the frame. The elongated cable-fixing member can be fixed along the length of tube of the bicycle frame, thus becoming part of the aesthetics of the tube. The elongated fixing member protects the length of cable accommodated therein and is advantageously designed so as to cover those lengths of cable that are located at the rear of the bicycle frames and thus more subject to exposure to shock. Preferably, the cable-fixing member is a continuous member, accommodating therein a whole length of cable while being fixed along a length of tube of the bicycle frame.

The fixation of the cable-fixing member to the frame by adhesive means provides for a very easy installation of the cable on the frame. The adhesive means for fixing the elongated fixing member comprise, for example, adhesive tape or a layer of adhesive located on the side portion for fixing. Such adhesive means are preferably initially protected by a protective sheet before the elongated fixing member is fixed to the bicycle frame.

The side portion for fixing is deformable so as to be adapted to the shape of the bicycle frame and, the cable-fixing member is made of deformable material. The side portion for fixing extends continuously along a side of the groove. The cable-fixing member comprises a first side portion for fixing, located on a first side of the groove, and a second side portion for fixing, located on the second side of said groove.

As indicated above, it is known to secure a cable on a part of a bicycle frame by means of one or several cable receivers formed of sleeve-like parts fixed to a tube of the bicycle frame, for example by welding, through which the cable is inserted. Due to the necessity of pushing or pulling the cable through such receivers, mounting or dismounting the cable is a tedious operation. Moreover, the diameter of the cable must be adapted to the inner diameter of the receivers which are fixed on the bicycle frame. Therefore, replacing a cable by a thicker cable may not be possible.

According to another embodiment, these drawbacks are substantially overcome by the fact that the cable-holding member comprises a cable hanger, comprising a ring portion adapted to receive therein the bicycle cable, a protrusion linked to said ring portion and adapted to be inserted in a receiver fixed to a bicycle frame, and fixing means for fixing said protrusion to said receiver.

The receiver fixed to the bicycle frame can be analogous to the receivers known in the art.

With the cable hanger, the cable is no longer inserted in such a receiver but is hung by the cable hanger of which the protrusion is inserted in the receiver so as to be attached to the bicycle frame. Therefore, mounting and dismounting a cable is much simpler than in the prior art. Further, cables of various diameters can be hung on the bicycle parts without difficulty, whereby a thinner cable can be replaced by a thicker cable or vice-versa, by selecting an adapted cable hanger.

Advantageously, the fixing means comprise a bolt assembly comprising a threaded bore in the protrusion and a screw. Advantageously, the protrusion of the cable hanger extends substantially in parallel to an axis of the ring portion.

Advantageously, the cable hanger comprises means for varying an inner section of the ring portion. The inner section of the ring portion can thus be adapted to cables of various diameters.

The invention will be better understood and its advantages will appear more clearly on reading the following detailed description given by way of a non-limiting example in reference to the accompanying drawings in which :
- figure 1 is a side view of a bicycle comprising a cable-holding device of the invention;
- figure 2 is a section view according to line II-II of figure 1;
- figure 3 is an analogous section view for a different section of the tube of the bicycle frame;
- figure 4 is a view in perspective showing the installation of the elongated cable-fixing member to the tube;
- figure 5 is a side view of the rear derailleur, showing a cable hanger which is not part of the invention;
- figure 6 is an enlarged view in perspective, showing the cable hanger fixed to the bicycle tube;
- figure 7 is an exploded view of the cable hanger;
- figure 8 is a section view in plane VIII of figure 6.

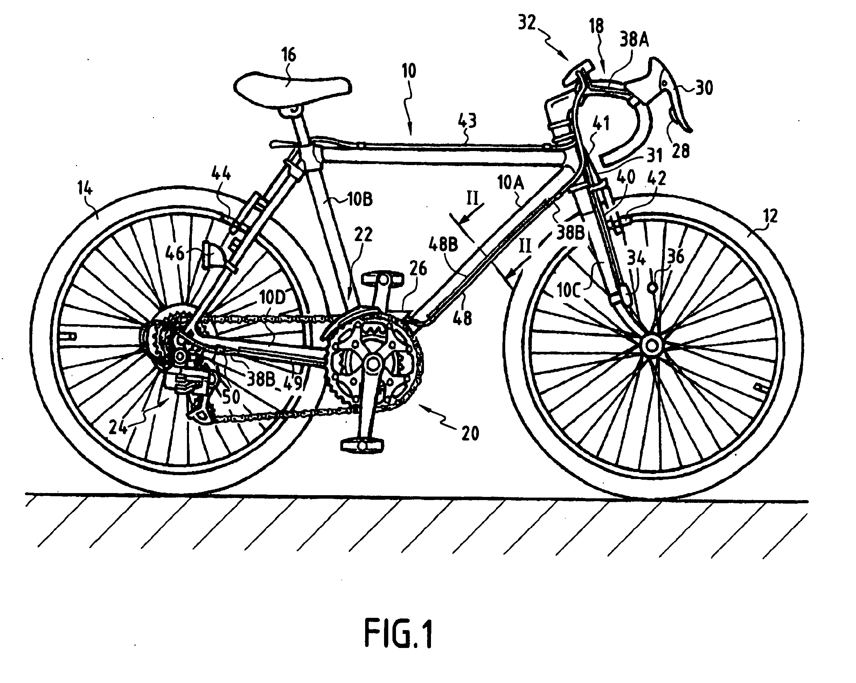

The bicycle of figure 1 comprises a frame 10, a front wheel 12 and a rear wheel 14, a saddle 16, handlebars 18 and a crank set 20 with a front derailleur 22 and a rear derailleur 24. In this bicycle, the front and rear derailleurs are motorized, and a battery box 26 is accommodated in the central area of the frame, close to the front derailleur. In the present case, this battery box 26 is mounted at the connection between the down tube 10A and the saddle tube 10B of the frame 10. Cables are provided for connecting the motors of these derailleurs to the derailleur switches which are close to the handlebars so as to be easily actionable by the rider. For example, the switch 28 for the rear derailleur is arranged on the brake lever 30 on the right side of the handlebars.

In the present case, the bicycle comprises a cycle computer 32, which is placed on the middle portion of the handlebars 18 and displays information relative to the ride.

For calculating the speed of the bicycle, the computer is connected to a speed sensor comprising, for example, a magnet sensor 34 mounted on the fork blade 10C and a magnet 36 mounted on a spoke of the front wheel so as to pass in front of the magnet sensor 34 for each rotation of the wheel 12. Thus, the computer 32 is informed of the number of rotations per minute of the wheel 12 and, knowing its dimensions, it can calculate the speed of the bicycle.

For detecting the position of the gears (selected sprocket) of the front and rear derailleurs, the bicycle further comprises gear position sensors which include, for example, a photo-transmitter/photo-receiver unit or a potentiometer. The computer is connected to these gear position sensors, so that the selected sprocket can be displayed on its screen.

The bicycle of figure 1 is equipped with several cables for controlling its components. In the example shown, these cables comprise a cable portion 38A extending on the handlebars between the derailleur switch 28 and the computer 32, a cable portion 38B extending from the computer to a lower central region of the frame along the down tube 10A and further extending between the crank set the rear derailleur along the chain stay 10D on the right side and a cable portion 40 extending between the magnet sensor 34 and the computer 32.

In addition to these cables, the bicycle comprises a front brake cable 31 for connecting a brake lever to the front brake 42 and a rear brake cable 43 for connecting a brake lever to the rear brake 44. The bicycle can also comprise lamps, in the present case a rear lamp 46, that can have its own battery or can be connected to a generator by a light cable.

In figure 1, lengths of the cable portion 38B are fixed to the bicycle frame by means of a cable-holding device according to the invention. In the present case, this cable-holding device comprises a first elongated cable-fixing member 48 for fixing a length of this cable portion 38B to the down tube 10A of the frame, a second elongated cable-fixing member 49 for fixing another length of cable portion 38B to the right chain stay 10D of the bicycle frame and a cable hanger 50 for hanging this length of cable to said chain stay where said length of cable is not accommodated in the cable-fixing member 49.

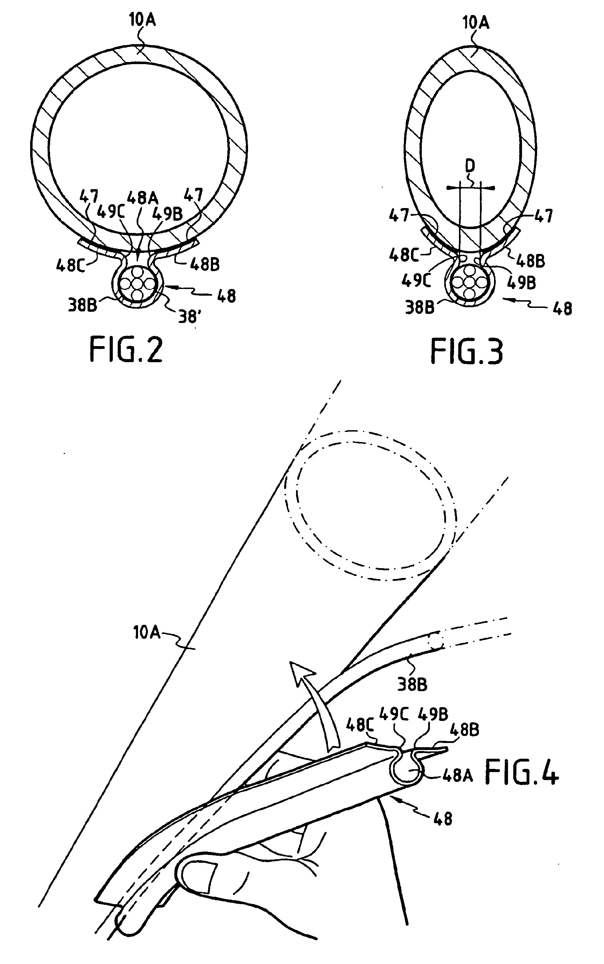

As shown in figures 2 and 3, the cable portion 38B comprises five lines in the length of said cable portion which extends along the down tube 10A of the frame. These lines comprise a power line connecting the battery box to the shift switches, a first signal-transmitting line for transmitting a shift signal to the front derailleur, a second signal-transmitting line for transmitting a shift signal to the rear derailleur, a first position signal-transmitting line for transmitting a gear position signal of the front derailleur to the computer and a second position signal-transmitting line for transmitting a signal of the position of the gear of the rear derailleur to the computer.

These five lines are gathered in a sheath 38'. The cable portion 38B thus comprises these five lines and this sheath.

Cable-fixing members 48 and 49 being identical, only cable-fixing member 48 is hereafter described in detail.

As shown in figures 2, 3 and 4, the cable-fixing member 48 has a longitudinal receiving groove 48A for receiving the bicycle cable formed in these figures by cable portion 38B and two side portions for fixing, respectively 48B and 48C.

As shown in the drawings, the cable-fixing member has an omega-shape (Ω) as viewed in cross-section. The longitudinal receiving groove 48A forming the curved central part of the Ω, whereas the side portions 48B and 48C form the side portions of the Ω.

These side portions form lateral wings that extend continuously along the respective sides of the groove 48A. By comparing figures 2 and 3, it can be seen that the shape of the cable-fixing member can be adapted to the outer shape of the tube of the frame to which said fixing member is to be fixed. More particularly, the side portions 48B and 48C are flexible so as to have their curvatures adapted to the curvature of the tube.

As shown in the drawings, the central groove 48A has edges, respectively a first edge 49B located at the connection of said groove with the first side portion 48B and a second edge 49C located at the connection of the groove with the second side portion 48C. The groove is deformable so that these edges 49B and 49C can be moved apart from one another so as to open the groove wide enough to insert the cable inside said groove. In fact, these edges 49B and 49C form retaining edges for retaining the cable therein. The distance D between the inner faces of these edges is smaller than the diameter of the cable. After having been opened to insert the cable therein, the groove elastically returns to a position where its retaining edges retain the cable therein.

The cable-fixing member 48 is advantageously an extruded member. Advantageously, the cable-fixing member is made of PET or of a material having similar properties.

For fixing the cable to the tube 10A, this cable is firstly introduced into the groove 48A of the cable-fixing member 48 and said fixing member is adhered to the tube by its side portions. The adhesive 47 can be a layer of adhesive located on the inner faces of the side portions or an adhesive tape. Advantageously, the adhesive extends over the whole surface of the inner faces of the side portions, between the retaining edges 49B and 49C and the respective free ends of the side portions.

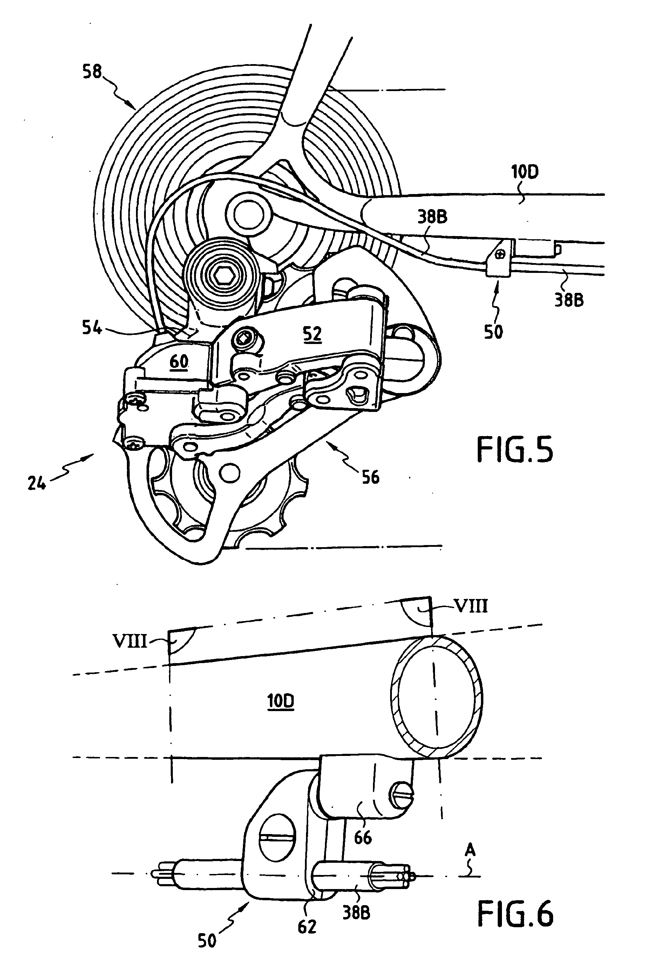

A further embodiment that is not part of the invention is now described in reference to figures 5 to 8.

As shown in figure 5, the rear derailleur 24 comprises, in a conventional manner, a parallelogram linkage mechanism 52 linked, on the one hand, to a support element 54 supported on the bicycle frame and, on the other hand, to a chain guide 56 having pulleys for the chain and a tensioning arm. A displacement of the elements constituting the parallelogram linkage mechanism moves the chain guide to the right or to the left with respect to the bicycle frame so as to put the chain (not shown) in the plane of one or the other of the sprockets constituting the cassette sprocket 58.

In the present case, the displacements of the element constituting the parallelogram linkage mechanism are motorized by a motor 60, controlled by one of the lines of the cable 38B. Figure 5 shows the rear derailleur and the rear part of the chain stay 10D. The elongated cable-fixing member 49 of figure 1 does not extend up to this area. Therefore, in this area, the cable is supported by a cable hanger 50.

This cable hanger comprises a ring portion 62 adapted to receive therein the cable 38B and a protrusion 64 that is adapted to be inserted in a sleeve-like receiver 66 fixed to the tube 10D.

More specifically, the cable hanger comprises two shells, respectively 50A and 50B, each having a groove, respectively 62A and 62B. When the two shells 50A and 50B are put together, these two grooves 62A and 62B form a cylindrical through-hole of the cable hanger, thus defining the ring portion 62.

The shells 50A and 50B have respective holes 68A and 68B which are aligned when the shells are put together, so that the threaded shank of a screw 70 can be inserted through said holes for securing the two shells with respect one to the other, hole 68B being threaded.

The inner section of the ring portion 62 is formed by the two grooves 62B and 62A. Depending on the diameter of the cable 38B, the two shells 50A and 50B can be clamped one against the other so as to close the profile of the through-hole formed by the two facing grooves 62A and 62B or, if the cable has a larger diameter, these shells can be put together so as to clamp the cable between them, without closing this profile. In such a case a slot is formed between the two facing edges 50'B 50'A of the shells.

Therefore, with the cable hanger, the inner section of the ring section can be varied so as to accommodate therein cables of several diameters.

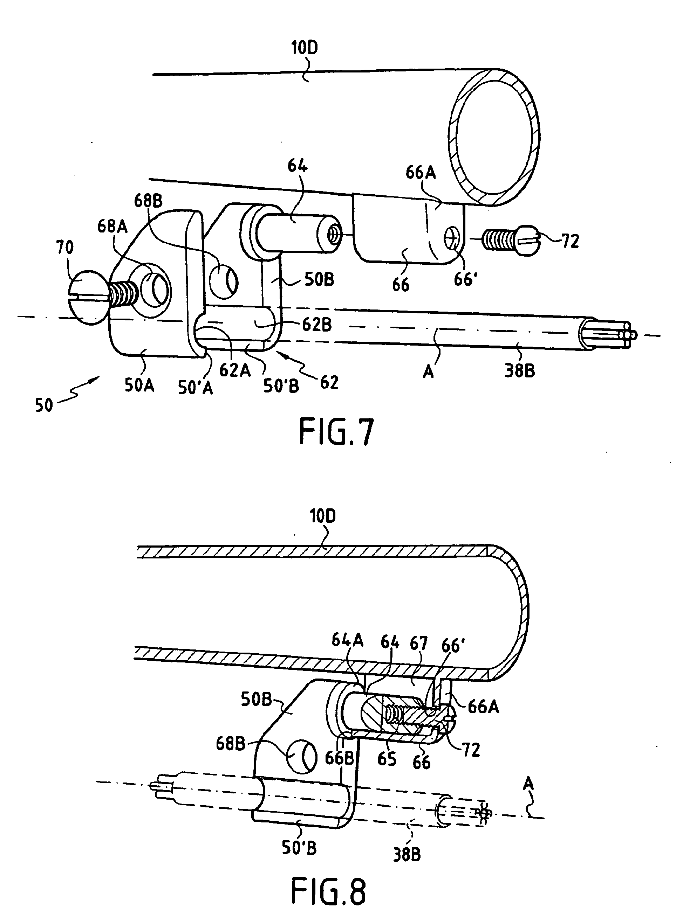

Preferably, as shown in the drawings, the protrusion 64 is formed on one of the shells. As shown in figure 8, this protrusion can be inserted in the cavity 67 of the sleeve-like receiver 66 which has a transverse wall portion 66A provided with a hole 66'. The protrusion 64 has a threaded bore 65 that faces said hole when said protrusion is inserted into said cavity. Thus, the cable hanger can be fixed to the frame by means of a screw 72, of which the head is retained by the transverse wall 66A and of which the post is rotated into the threaded bore 65.

At its end opposite to the opening of the threaded bore 65, the protrusion 64 presents a shoulder 64A which abuts against an edge 66B of the sleeve-like receiver 66 opposite to the transverse wall 66A where the screw 72 is screwed into the bore 65. Therefore, shell 50B of the cable hanger is supported by the receiver 66 without moving with respect thereto.

The cable hanger can be easily mounted and dismounted due to the simple bolt assembly comprising bore 65 and screw 72. Shell 50A can be secured to shell 50B around the cable so as to manipulate the cable hanger as a single piece for fixing it to the receiver or, on the contrary, shell 50A can be secured to shell 50B after securing the latter to the receiver 66. In any case, the two shells of the cable hanger are put together around the cable, without the necessity of inserting the latter into the ring portion by one of its ends.

As shown in the drawings, the protrusion 64 of the cable hanger extends substantially in parallel to an axis A of the ring portion 62.

## Claims

1. A cable-holding device for a bicycle cable (38B), comprising an elongated cable-fixing member (48, 49) having side portions for fixing (48B, 48C) adapted for fixing to a bicycle frame (10) by adhesive means, wherein the elongated cable fixing member (48, 49) is fixable along a length of tube of the bicycle frame so as to accommodate therein a length of cable,
**characterized in that** the elongated cable-fixing member (48, 49) further comprises a longitudinal receiving groove (48A) for receiving the bicycle cable (38B), said groove (48A) having first and second edges (49B, 49C),
**in that** the side portions (48B, 48C) are each located along a side of said groove and are deformable so as to be adapted to a shape of the bicycle frame, and
**in that** the adhesive means extends over the inner faces of the side portions (48B, 48C), said inner faces being located between the edges (49B; 49C) and the respective free ends of the side portions (48B, 48C).

2. A cable-holding device as claimed in claim 1, **characterized in that** the groove (48A) can be elastically deformed so as to be opened by moving apart the first and second edges (49B, 49C).

3. A cable-holding device as claimed in claim 1 or 2, **characterized in that** the cable-fixing member (48, 49) is made of deformable material.

4. A cable-holding device as claimed in any one of claims 1 to 3, **characterized in that** each side portion (48B, 48C) for fixing extends contiguously along a side of the groove (48A).

5. A cable-holding device as claimed in any one of claims 1 to 4, **characterized in that** the cable-fixing member (48) comprises a first side portion (48B) for fixing located on a first side of the groove (48A) and a second side portion for fixing (48C) located on the second side of said groove (48A).

6. A cable-holding device as claimed in any one of claims 1 to 5, **characterized in that** first and second edges of the groove are retaining edges for retaining the cable (38B) in said groove.

7. A cable-holding device as claimed in any one of claims 1 to 6, **characterized in that** the cable-fixing member (48, 49) has a Q shape in cross-section.

8. A cable-holding device as claimed in any one of claims 1 to 7, **characterized in that** the cable-fixing member (48, 49) is an extruded member.

9. A cable-holding device as claimed in any one of claims 1 to 8, **characterized in that** the cable-fixing member (48, 49) is made of PET.

## Patentansprüche

1. Kabelhaltevorrichtung für ein Fahrradkabel (38B), umfassend ein langgestrecktes Kabelbefestigungselement (48, 49) mit Seitenabschnitten zum Befestigen (48B, 48C), die mit einem Klebstoffmittel an einem Fahrradrahmen (10) befestigt werden können, wobei das langgestreckte Kabelbefestigungselement (48, 49) entlang eines Rohrstreckenstücks des Fahrradrahmens so befestigbar ist, daß darin ein Kabelstreckenstück untergebracht werden kann,
**dadurch gekennzeichnet, daß**
das langgestreckte Kabelbefestigungselement (48, 49) außerdem eine längs verlaufende Aufnahmerinne (48A) zum Aufnehmen des Fahrradkabels (38B) umfaßt, wobei die Rinne (48A) einen ersten und einen zweiten Rand (49B, 49C) aufweist,
die Seitenabschnitte(48B, 48C) jeweils entlang einer Seite der Rinne angeordnet und so verformbar sind, daß sie an eine Form des Fahrradrahmens angepaßt werden können, und
sich das Klebstoffmittel über die Innenflächen der Seitenabschnitte(48B, 48C) hinzieht, wobei die Innenflächen zwischen den Rändern (49B, 49C) und den jeweiligen freien Enden der Seitenabschnitte(488, 48C) liegen.

2. Kabelhaltevorrichtung nach Anspruch 1, **dadurch gekennzeichnet, daß** die Rinne (48A) elastisch so verformt werden kann, daß sie durch Auseinanderbewegen des ersten und des zweiten Rands (49B, 49C) geöffnet werden kann.

3. Kabelhaltevorrichtung nach Anspruch 1 oder 2, **dadurch gekennzeichnet, daß** das Kabelbefestigungselement (48, 49) aus verformbarem Material besteht.

4. Kabelhaltevorrichtung nach einem der Ansprüche 1 bis 3, **dadurch gekennzeichnet, daß** sich jeder Seitenabschnitt (48B, 48C) zum Befestigen kontinuierlich entlang einer Seite der Rinne (48A) erstreckt.

5. Kabelhaltevorrichtung nach einem der Ansprüche 1 bis 4, **dadurch gekennzeichnet, daß** das Kabelbefestigungselement (48, 49) einen ersten Seitenabschnitt (48B) zum Befestigen, der auf einer ersten Seite der Rinne (48A) liegt, und einen zweiten Seitenabschnitt (48B) zum Befestigen umfaßt, der auf der zweiten Seite der Rinne (48A) liegt.

6. Kabelhaltevorrichtung nach einem der Ansprüche 1 bis 5, **dadurch gekennzeichnet, daß** der erste und der zweite Rand der Rinne Halteränder zum Festhalten des Kabels (38B) in der Rinne sind.

7. Kabelhaltevorrichtung nach einem der Ansprüche 1 bis 6, **dadurch gekennzeichnet, daß** das Kabelbefestigungselement (48, 49) im Querschnitt eine S2-Form aufweist.

8. Kabelhaltevorrichtung nach einem der Ansprüche 1 bis 7, **dadurch gekennzeichnet, daß** das Kabelbefestigungselement (48, 49) ein extrudiertes Element ist.

9. Kabelhaltevorrichtung nach einem der Ansprüche 1 bis 8, **dadurch gekennzeichnet, daß** das Kabelbefestigungselement (48, 49) aus PET besteht.

## Revendications

1. Dispositif de maintien de câble pour un câble de bicyclette (38B), comportant un élément de fixation de câble allongé (48, 49) ayant des parties latérales pour la fixation (48B, 48C) prévues pour la fixation sur un cadre de bicyclette (10) par des moyens adhésifs, l'élément de fixation de câble allongé (48, 49) étant apte à être fixé sur une longueur de tube du cadre de bicyclette de façon à y recevoir une longueur de câble,
**caractérisé en ce que** l'élément de fixation de câble allongé (48, 49) comporte en outre une rainure de réception longitudinale (48A) destinée à recevoir le câble de bicyclette (38B), ladite rainure (48A) ayant des premier et deuxième bords (49B, 49C),
**en ce que** les parties latérales (48B, 48C) sont chacune disposées le long d'un côté de ladite rainure et sont déformables de façon à être adaptées à une forme du cadre de bicyclette, et
**en ce que** les moyens adhésifs s'étendent sur les faces intérieures des parties latérales (48B, 48C), lesdites faces intérieures se trouvant entre les bords (49B, 49C) et les extrémités libres respectives des parties latérales (48B, 48C).

2. Dispositif de maintien de câble selon la revendication 1, **caractérisé en ce que** la rainure (48A) peut être élastiquement déformée de façon à être ouverte en écartant les premier et deuxième bords (49B, 49C).

3. Dispositif de maintien de câble selon la revendication 1 ou 2, **caractérisé en ce que** l'élément de fixation de câble (48, 49) est fabriqué dans un matériau déformable.

4. Dispositif de maintien de câble selon l'une quelconque des revendications 1 à 3, **caractérisé en ce que** chaque partie latérale (48B, 48C) pour la fixation s'étend de manière continue le long d'un côté de la rainure (48A).

5. Dispositif de maintien de câble selon l'une quelconque des revendications 1 à 4, **caractérisé en ce que** l'élément de fixation de câble (48) comporte une première partie latérale (48B) pour la fixation située sur un premier côté de la rainure (48A) et une deuxième partie latérale pour la fixation (48C) située sur le deuxième côté de ladite rainure (48A).

6. Dispositif de maintien de câble selon l'une quelconque des revendications 1 à 5, **caractérisé en ce que** les premier et deuxième bords de la rainure sont des bords de retenue destinés à retenir le câble (38B) dans ladite rainure.

7. Dispositif de maintien de câble selon l'une quelconque des revendications 1 à 6, **caractérisé en ce que** l'élément de fixation de câble (48, 49) a une section transversale en forme de Ω.

8. Dispositif de maintien de câble selon l'une quelconque des revendications 1 à 7, **caractérisé en ce que** l'élément de fixation de câble (48, 49) est un élément extrudé.

9. Dispositif de maintien de câble selon l'une quelconque des revendications 1 à 8, **caractérisé en ce que** l'élément de fixation de câble (48, 49) est fabriqué en PET.
